# EUROPEAN PATENT APPLICATION

(11) **EP 4 451 169 A1**
(43) Date of publication of application: **23.10.2024**
(21) Application number: 22907379.6
(22) Date of filing: 09.12.2022
(51) Int. Cl.: G06F 40/166

(54) **HISTORY MANAGEMENT PROGRAM, HISTORY MANAGEMENT METHOD, AND HISTORY MANAGEMENT DEVICE**

(30) Priority: 16.12.2021 JP 2021204627
(71) Applicant: BROTHER KOGYO KABUSHIKI KAISHA, Nagoya-shi, Aichi 467-8561 (JP)
(72) Inventor: KUDO Yasuhiro, Nagoya-shi, Aichi 467-8562 (JP); UEDA Yuma, Nagoya-shi, Aichi 467-8562 (JP)
(74) Representative: J A Kemp LLP
(86) International application number: PCT/JP2022/045434
(87) International publication number: WO 2023/112852

(57) **Abstract**

Provided is a history management program, a history management method, and a history management device for efficiently implementing a function of returning a state to a previous state by undoing an operation performed immediately before. A display device receives an input operation for updating a display content on a display unit (S11:YES, S13:YES). The display device stores a data code Cm indicating the display content updated in response to the received input operation as the data code Cm indicating a current display content (S19). The display device determines an UNDO code necessary to return the current display content to a pre-update display content that is the display content before update (S29). The display device stores the determined UNDO code as history information in association with an operating order indicating an ordinal number of the received input operation.

## Description

### TECHNICAL FIELD

The present invention relates to a history management program, a history management method, and a history management device.

### BACKGROUND

There has been known a device that stores an operation history into a storage unit in response to performance of an operation for inputting, changing, or deleting text or an image. For example, in an input device disclosed in Patent Document 1, pieces of stroke data of a text string input by handwriting operations are stored into a stroke data accumulation unit in an order in which the handwriting operations are performed.

A function of returning a state to the previous state by undoing the operation performed immediately before is generally known as an UNDO function. Here, an example case will be described where the UNDO function is implemented in a device that stores one or more pieces of information each indicating an adding operation of newly adding a text or an image (hereinafter, referred to as "adding operation information") as history information in an operating order, as in a manner disclosed in Patent Document 1. In this case, the UNDO function can be implemented by referring to one piece of the one or more pieces of additional operation information in the order reverse to the operating order in the stored history information and undoing the additional operation indicated by the referred additional operation information.

### Citation List

### Patent Literature

[Patent Document 1] JP2007-265171A

### SUMMARY

### Technical Problem

A changing operation for changing an input text or image or a deleting operation for deleting an input text or image may be performed at the same time of performing the adding operation. In this case, not only the adding operation information but also changing operation information indicating the changing operation and deleting operation information indicating the deleting operation are included in the history information. Although the UNDO function is to be implemented in such a situation, the operation performed immediately before might not be undone to return to the previous state with only one piece of operation history information referred to from the history information in the order reverse to the operating order. As described above, in a case where the history information in which a plurality of pieces of the operation information are stored in the operating order is used, the UNDO function may be realized by referring to two or more pieces of the plurality of pieces of operation information, which is inefficient.

An object of the present invention is to provide a history management program, a history management method, and a history management device for efficiently implementing a function of returning a state to the previous state by undoing an operation performed immediately before.

### Solution to Problem

A history management program according to a first aspect of the present invention causes a computer to execute: a first receiving step to receive an input operation for updating a display content on a display unit; a first storing step to store the display content into a storage unit as a current display content, the display content having been updated in response to the input operation received in the first receiving step; a first determining step to determine an UNDO process necessary to return the current display content to a pre-update display content being the display content before update; and a second storing step to store the UNDO process determined in the first determining step into the storage unit as history information, in association with an operating order indicating an ordinal number of the input operation received in the first receiving step.

In response to receiving an instruction to perform an UNDO function of undoing an operation performed immediately before to return a current display state to the previous display state, the computer that executes the history management program can implement the UNDO function by referring to the history information and executing the selected UNDO process in the order reverse to the operating order. Thus, the computer can implement the UNDO function without referring to the plurality of pieces of information stored as the history information, thereby performing the UNDO function efficiently.

A history management method according to a second aspect of the present invention causes a computer to execute: a first receiving step to receive an input operation for updating a display content on a display unit; a first storing step to store the display content into a storage unit as a current display content, the display content having been updated in response to the input operation received in the first receiving step; a first determining step to determine an UNDO process necessary to return the current display content to a pre-update display content being the display content before update; and a second storing step to store the UNDO process determined in the first determining step into the storage unit as history information, in association with an operating order indicating an ordinal number of the input operation received in the first receiving step. According to a third aspect, the same effects as those obtained by the first aspect can be achieved.

A history management device according to a third aspect of the present invention includes: first receiving means to receive an input operation for updating a display content on a display unit; first storing means to store the display content into a storage unit as a current display content, the display content having been updated in response to the input operation received in the first receiving means; first determining means to determine an UNDO process necessary to return the current display content to a pre-update display content being the display content before being updated; and second storing means to store the UNDO process determined in the first determining means into the storage unit as history information, in association with an operating order indicating an ordinal number of the input operation received in the first receiving means. According to a fourth aspect, the same effects as those obtained by the first aspect and Claim 1 can be achieved.

### BRIEF DESCRIPTION OF THE DRAWINGS

[FIG. 1] FIG. 1 is a diagram illustrating an overview and an electrical configuration of a display device 3.
[FIG. 2] FIG. 2 illustrates history information Ud stored in a known manner.
[FIG. 3] FIG. 3 illustrates history information Us stored in the present embodiment.
[FIG. 4] FIG. 4 illustrates an example of a display screen 5A.
[FIG. 5] FIG. 5 is a flowchart of a first flag control process.
[FIG. 6] FIG. 6 is a flowchart of a first main process.
[FIG. 7] FIG. 7 is a continuation of FIG. 6 that is the flowchart of the first main process.
[FIG. 8] FIG. 8 is a continuation of FIG. 7 that is the flowchart of the first main process.
[FIG. 9] FIG. 9 is a diagram illustrating an overview of a communication system 1 and an electrical configuration of a server 2.
[FIG. 10] FIG. 10 is a diagram illustrating a communication sequence in the communication system 1.
[FIG. 11] FIG. 11 illustrates an example of a display screen 5B.
[FIG. 12] FIG. 12 is a flowchart of a second flag control process.
[FIG. 13] FIG. 13 is a flowchart of a second main process.
[FIG. 14] FIG. 14 is a continuation of FIG. 13 that is the flowchart of the second main process.
[FIG. 15] FIG. 15 is a continuation of FIG. 14 that is the flowchart of the second main process.
[FIG. 16] FIG. 16 is a continuation of FIG. 15 that is the flowchart of the second main process.

### DETAILED DESCRIPTION

An embodiment of the present invention will be described with reference to the drawings. The drawings to be referred to are used for describing technical features that may be adopted by the present invention, and configurations of devices described herein are not intended to be limited thereto, but are merely illustrative examples.

### <First Embodiment>

### <Configuration of Display Device 3>

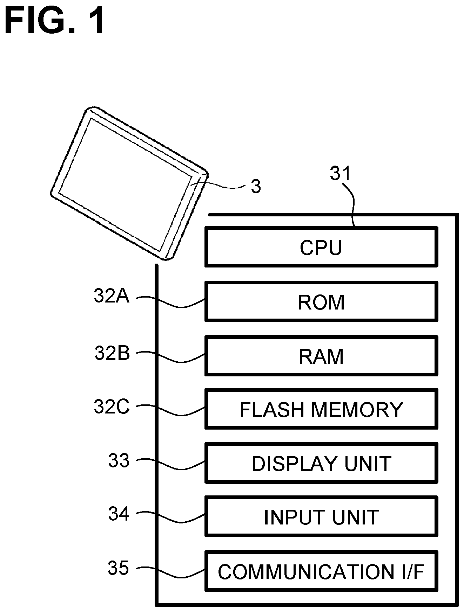

An overview of a display device 3 will be described with reference to FIG. 1. The display device 3 is a known tablet terminal. The display device 3 includes a CPU 31, a ROM 32A, a RAM 32B, a flash memory 32C, a display unit 33, an input unit 34, and a communication interface (I/F) 35.

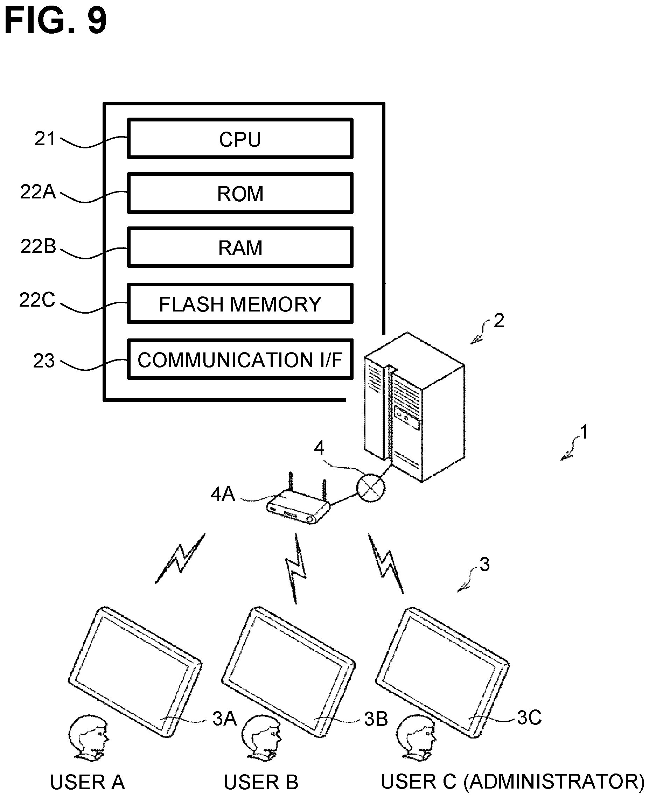

The CPU 31 controls the display device 3 entirely. The ROM 32A stores a boot program and initial setting information. The RAM 32B temporarily stores data during execution of processing by the CPU 31. The flash memory 32C stores, for example, a control program to be executed by the CPU 31, a data code Cm, a data code Ch, and history information Us. The display unit 33 is a liquid crystal display. The input unit 34 is a touch screen disposed on a surface of the display unit 33. The communication I/F 35 is a communication module for performing communication with the server 2 (refer to FIG 9) via a network line 4 and an access point 4A (refer to FIG 9), which are described later.

### <History Information Us>

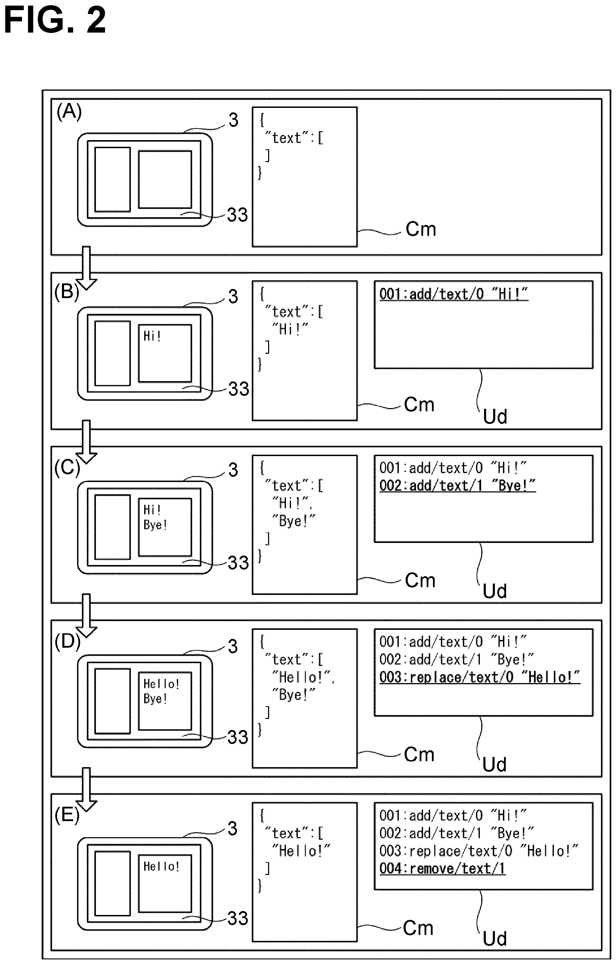

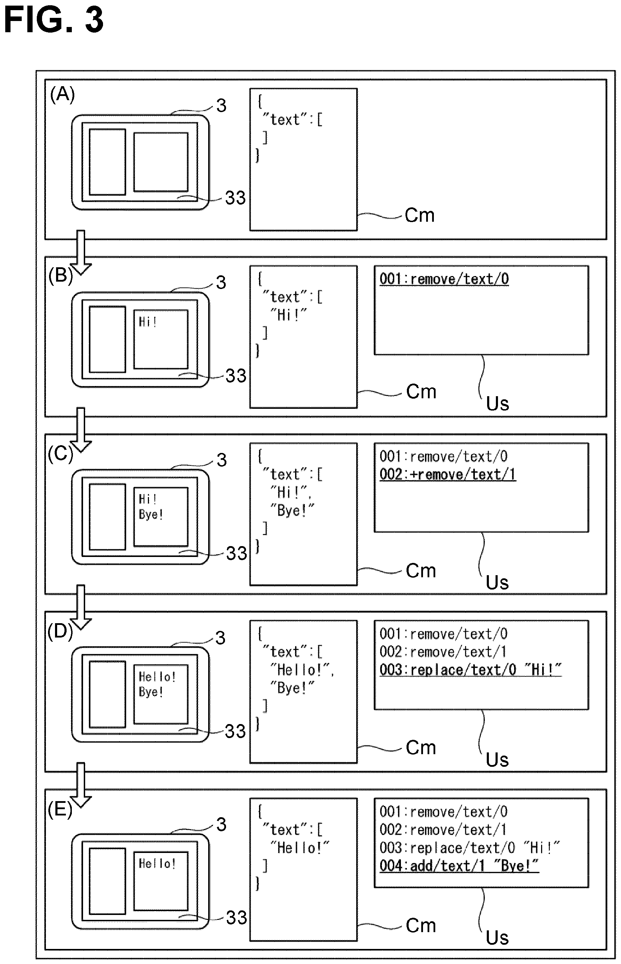

A description will be provided on a case where an input operation for updating display content displayed on the display unit 33 is performed via the input unit 34 in the display device 3. FIGS. 2 and 3 illustrate updated display contents each displayed on the display unit 33 after respective corresponding input operations are performed, the data codes Cm indicating the respective updated display contents, and history information Ud (refer to FIG. 2) and Us (refer to FIG. 3). In FIGS. 2 and 3, common input operations are performed in turn. The data codes Cm are described in the JSON format, and are identical to each other in FIGS. 2 and 3. In FIGS. 2 and 3, the history information Ud and the history information Us are different from each other. FIG. 2 illustrates the history information Ud stored in a known manner for reason of comparison. FIG. 3 illustrates the history information Us stored in a manner according to the present embodiment.

In a first example illustrated in FIG. 2, first, an input operation for adding and displaying a new image (text string, "Hi!") in the zeroth line on the display unit 33 is performed. Hereinafter, an input operation for adding and displaying a new image is referred to as an "adding operation".

In this case, an instruction code "add/text/0"Hi!"" is executed. The instruction code "add/text/0"Hi!"" includes a command "add" indicating that a new image is added and displayed on the display unit 33, a type "text" indicating that a type of the image is a text string, a line "0" indicating a location at which the image is added, and a text string to be added "Hi!". As a result, as illustrated in FIG. 2B, "Hi!" is added to the zeroth line in the data code Cm. Further, the display content is updated to display the text string "Hi!" in the zeroth line on the display unit 33. In addition, the executed instruction code "add/text/0"Hi!"" is added to the history information Ud. The added instruction code "add/text/0"Hi!"" is associated with an operating order "001". The operating order indicates an ordinal number of the received input operation.

Next, an adding operation for further adding a new text string "Bye!" to the first line on the display unit 33 is performed. In this case, an instruction code "add/text/1"Bye!"" is executed. The instruction code "add/text/1"Bye!"" includes a command "add", a type "text, a line "1", and a text string to be added "Bye!". As a result, as illustrated in FIG. 2C, "Bye!" is added to the first line in the data code Cm. Further, the display content is updated to display the text string "Bye!" in the first line on the display unit 33. In addition, the executed instruction code "add/text/1"Bye!"" is added to the history information Ud. The added instruction code "add/text/1"Bye!"" is associated with an operating order "002".

Next, an input operation for changing the text string "Hi!" displayed in the zeroth line on the display unit 33 to another text string "Hello!" is performed. Hereinafter, an input operation for changing the image displayed on the display unit 33 to another image is referred to as a "changing operation".

In this case, an instruction code "replace/text/0"Hello!"" is executed. The instruction code "replace/text/0"Hello!"" includes a command "replace" indicating that the image is changed to another image, a type "text", a line "0" indicating the line in which the image is changed, and a text string "Hello!". As a result, as illustrated in FIG. 2D, the text in the zeroth line in the data code Cm is changed to "Hello!". Further, the display content is updated to display the text string "Hello!" changed from the text string "Hi!" (refer to FIG. 2C) displayed in the zeroth line on the display unit 33. In addition, the executed instruction code "replace/text/0"Hello!"" is added to the history information Ud. The added instruction code "replace/text/0"Hello!"" is associated with an operating order "003".

Next, an input operation for deleting the text string "Bye!" from the first line on the display unit 33 is performed. Hereinafter, an input operation for deleting the image that has been displayed on the display unit 33 is referred to as a "deleting operation".

In this case, an instruction code "remove/text/1" is executed. The instruction code "remove/text/1" includes a command "remove" indicating that the image is deleted, a type "text", and a line "1" indicating the line in which the image is deleted. As a result, as illustrated in FIG. 2E, the text in the first line in the data code Cm is deleted. Further, the display content is updated to delete the text string "Bye!" that has been displayed in the first line on the display unit 33 (refer to FIG. 2D). In addition, the executed instruction code "remove/text/1" is added to the history information Ud. The added instruction code "remove/text/1" is associated with an operating order "004".

On the contrary, in a second example illustrated in FIG. 3, the history information Us is stored in a manner different from that of the first example illustrated in FIG. 2. The details are as follows.

First, an adding operation for adding a text string "Hi!" to the zeroth line on the display unit 33 is performed. In this case, an instruction code "add/text/0"Hi!"" (refer to FIG. 2B) is executed. As a result, as illustrated in FIG. 3B, "Hi!" is added to the zeroth line in the data code Cm. Further, the display content is updated to display the text string "Hi!" in the zeroth line on the display unit 33.

In addition, an instruction code necessary to return the post-update display content (refer to FIG. 3B) to the pre-update display content (refer to FIG. 3A) is determined. The details are as follows. In order to return the post-update display content illustrated in FIG. 3B to the pre-update display content illustrated in FIG. 3A, the text string "Hi!" displayed in the zeroth line on the display unit 33 is deleted. Thus, an instruction code "remove/text/0" including a command "remove", a type "text", and a line "0" is determined. The determined instruction code is added to the history information Us. The added instruction code "remove/text/0" is associated with an operating order "001".

Next, an adding operation for adding a text string "Bye!" to the first line on the display unit 33 is performed. In this case, an instruction code "add/text/1"Bye!"" (refer to FIG. 2C) is executed. As a result, as illustrated in FIG. 3C, "Bye!" is added to the first line in the data code Cm. Further, the display content is updated to display the text string "Bye!" in the first line on the display unit 33.

In addition, an instruction code necessary to return the post-update display content (refer to FIG. 3C) to the pre-update display content (refer to FIG. 3B) is determined. The details are as follows. In order to return the post-update display content illustrated in FIG. 3C to the pre-update display content illustrated in FIG. 3B, the text string "Bye!" displayed in the first line on the display unit 33 is deleted. Thus, an instruction code "remove/text/1" including a command "remove", a type "text", and a line "1" is determined. The determined instruction code is added to the history information Us. The added instruction code "remove/text/1" is associated with an operating order "002".

Next, a changing operation for changing the text string "Hi!" displayed in the zeroth line on the display unit 33 to another text string "Hello!" is performed. In this case, an instruction code "replace/text/0"Hello!"" (refer to FIG. 2D) is executed. As a result, as illustrated in FIG. 3D, the text in the zeroth line in the data code Cm is changed to "Hello!". Further, the display content is updated to display the text string "Hello!" changed from the text string "Hi!" (refer to FIG. 3C) displayed in the zeroth line on the display unit 33.

In addition, an instruction code necessary to return the post-update display content (refer to FIG. 3D) to the pre-update display content (refer to FIG. 3C) is determined. The details are as follows. In order to return the post-update display content illustrated in FIG. 3D to the pre-update display content illustrated in FIG. 3C, the text string "Hello!" displayed in the zeroth line on the display unit 33 is changed to a text string "Hi!". Thus, an instruction code "replace/text/0"HI!"" including a command "replace", a type "text", a line "0", and a text string "Hi!" is determined. The determined instruction code is added to the history information Us. The added instruction code "replace/text/0"Hi!"" is associated with an operating order "003".

Next, a deleting operation for deleting the text string "Bye!" displayed in the first line on the display unit 33 is performed. In this case, an instruction code "remove/text/1" (refer to FIG. 2E) is executed. As a result, as illustrated in FIG. 3E, the first line in the data code Cm is deleted. Further, the display content is updated to delete the text string "Bye!" that has been displayed in the first line on the display unit 33 (refer to FIG. 3D).

In addition, an instruction code necessary to return the post-update display content (refer to FIG. 3E) to the pre-update display content (refer to FIG. 3D) is determined. The details are as follows. In order to return the post-update display content illustrated in FIG. 3E to the pre-update display content illustrated in FIG. 3D, the text string "Bye!" is added and displayed in the first line on the display unit 33. Thus, an instruction code "add/text/1"Bye!"" including a command "add", a type "text, a line "1", and a text string to be added "Bye!" is determined. The determined instruction code is added to the history information Us. The added instruction code "add/text/1"Bye!"" is associated with an operating order "004".

### <Display Screen 5A>

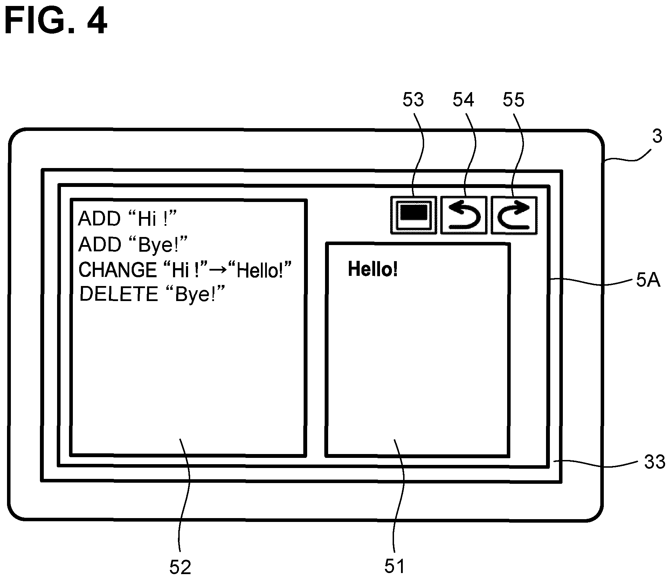

FIG. 4 illustrates a detail of a display screen 5A displayed on the display unit 33 of the display device 3. The display screen 5A includes a main area 51, an operation history area 52, a save button 53, an UNDO button 54, and a REDO button 55. FIG. 4 illustrates a state after a series of input operations (the adding operation, the changing operation, and the deleting operation) illustrated in FIGS. 3A to 3E are performed.

An image corresponding to the input operations is displayed in the main area 51. The display content in the main area 51 (hereinafter, referred to as "current display content") is identified based on the data code Cm (refer to FIG. 3) stored in the flash memory 32C. In the operation history area 52, a plurality of pieces of information indicating the respective input operations that have been performed (hereinafter, referred to as "input operation items") are displayed in the order in which the input operations have been performed. The display content in the operation history area 52 is identified based on the data code Ch stored in the flash memory 32C. The data code Ch is determined based on the history information Us.

In an example illustrated in FIG. 4, only the text string "Hello!" is displayed as the current display content in the main area 51, as in FIG. 3E. In the operation history area 52, the input operation items "add"Hi!"", "add"Bye!"", "change"Hi!"=>"Hello!"", and "remove"Bye!"" are displayed in this order from above. The input operation item "add"Hi!"" indicates the adding operation for adding the text string "Hi!" (refer to FIG. 3B). The input operation item "add"Bye!"" indicates the adding operation for adding the text string "Bye!" (refer to FIG. 3C). The input operation items "change"Hi!"=>"Hello!"" indicates the changing operation for changing the text string "Hi" to the text string "Hello!" (refer to FIG. 3D). The input operation item "delete"Bye!"" indicates the deleting operation for deleting the text string "Bye" (refer to FIG. 3E). The order of displaying the input operation items corresponds to the order in which the input operations have been performed.

In a case where a user performs an operation for selecting one of the input operation items in the operation history area 52 by touching to maintain the selected state of the one of the input operations, the user can delete the selected input operation item from the operation history area 52. Hereinafter, the operation for selecting and maintaining one of the input operation items is referred to as a "selecting operation".

The save button 53 is a selection button for saving a file indicating the current display content into the flash memory 32C. Hereinafter, the input operation of selecting the save button 53 is referred to as a "saving operation".

The UNDO button 54 is a selection button for undoing the adding operation, the changing operation, and the deleting operation in the order reverse to the order in which those input operations have been performed. Hereinafter, the input operation of selecting the UNDO button 54 is referred to as an "UNDO operation". In a case where an UNDO operation is performed, the current display content in the main area 51 is returned to the display content before the adding operation, the changing operation, and the deleting operation are performed from the display content after the adding operation, the changing operation, and the deleting operation are performed.

In the present embodiment, as described above, an instruction code necessary to return the post-update display content to the pre-update display content is stored as the history information Us. Thus, the display device 3 can implement the operation of updating the current display content in the main area 51 in response to the UNDO operation by executing the instruction codes stored in the history information Us as they are.

The REDO button 55 is a selection button for undoing the input operation of selecting the UNDO button 54. Hereinafter, the input operation of selecting the REDO button 55 is referred to as a "REDO operation". In a case where a REDO operation is performed, the display content in the main area 51 is returned to the display content before the operation of selecting the UNDO button 54 is performed from the display content after the operation of selecting the UNDO button 54 is performed.

### <First Flag Control Process>

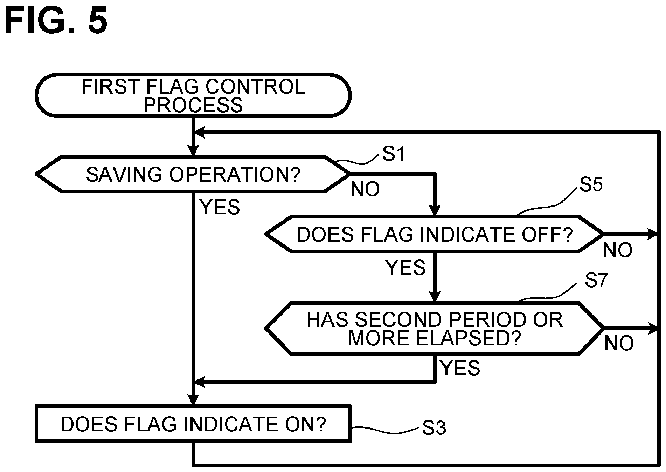

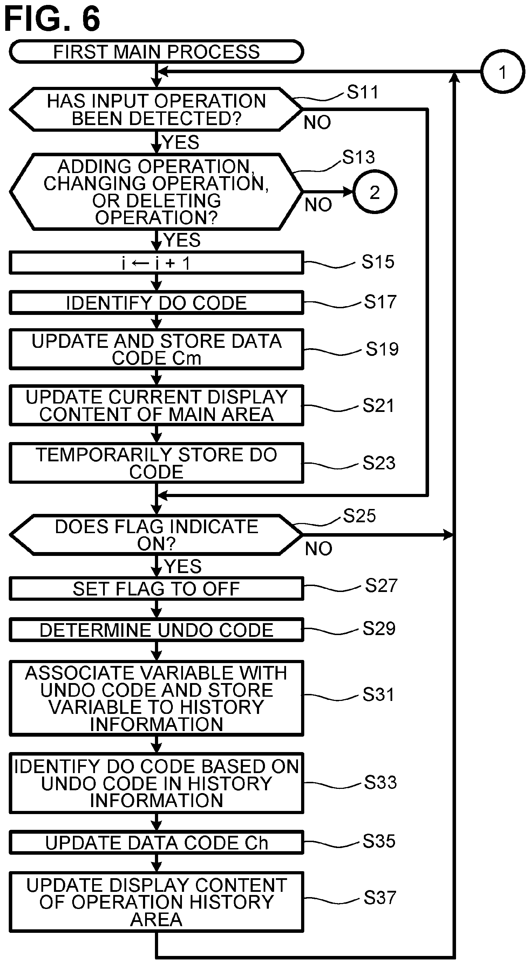

The first flag control process will be described with reference to FIG. 5. The first flag control process is for controlling a flag used for determining a timing of updating the history information Us by adding an instruction code to the history information Us. The flag is stored in the RAM 32B. The flag is referred to in a first main process (refer to FIGS. 6 to 8) described later. In response to an operation for starting an application for displaying the display screen 5A being performed via the input unit 34, the CPU 31 reads the control program from the flash memory 32C to execute the control program, whereby the first flag control process is started. At the start of the first flag control process, the flag indicates zero. Hereinafter, setting the flag to zero is referred to as "setting the flag to OFF", and setting the flag to one is referred to as "setting the flag to ON".

The CPU 31 determines whether a saving operation on the display screen 5A has been detected (S1). In a case where the saving operation has been detected (S1:YES), the CPU 31 sets the flag to ON (S3). The CPU 31 returns the process to S1.

In a case where the saving operation has not been detected (S1:NO), the CPU 31 moves the process to S5. The CPU 31 determines whether the flag indicates OFF (S5). If the CPU 31 determines that the flag indicates ON (SS:NO), the CPU 31 returns the process to S1. If the CPU 31 determines that the flag indicates OFF (S5:YES), the CPU 31 determines whether a second period or more has elapsed in a state where the flag indicates OFF and any input operation has not been detected (S3). If the CPU 31 determines that the second period or more has elapsed in a state where the flag indicates OFF and any input operation has not been detected (S7:YES), the CPU 31 sets the flag to ON (S3). The CPU 31 returns the process to S1.

If the CPU 31 determines that the second period or more has not elapsed in a state where the flag indicates OFF and any input operation has not been detected (S7:NO), the CPU 31 returns the process to S1.

### <First Main Process>

The first main process will be described with reference to FIGS. 6 to 8. In a case where the power of the display device 3 is turned on, in response to an operation for starting an application for displaying the display screen 5A being performed via the input unit 34, the CPU 31 reads the control program from the flash memory 32C to execute the control program, whereby the first flag control process is started. The first main process is executed in parallel with the first flag control process. At the start of the first main process, a variable i stored in the RAM 32B is assigned with zero.

Hereinafter, the display content displayed in the main area 51 of the display screen 5A is referred to as the "current display content". An instruction code for updating the current display content in response to an input operation is referred to as a "DO code". The current display content before being updated by the DO code is referred to as "pre-update display content". The current display content after being updated by the DO code is referred to as "post-update display content". An instruction code necessary to return the post-update display content to the pre-update display content is referred to as an "UNDO code".

The CPU 31 determines whether an input operation to the input unit 34 has been detected (S1 1). If the CPU 31 determines that any input operation has not been detected (S11:NO), the CPU 31 moves the process to S25. In a case where an input operation has been detected (S11:YES), the CPU 31 determines whether the detected input operation is any one of the adding operation, the changing operation, and the deleting operation (S13).

If the CPU 31 determines that the detected input operation is one of the adding operation, the changing operation, and the deleting operation (S13:YES), the CPU 31 updates the variable i by adding one to the variable i (S15). The CPU 31 identifies the DO code corresponding to the detected operation among the adding operation, the changing operation, and the deleting operation (S17). The CPU 31 updates the data code Cm by executing the identified DO code and stores the updated data code Cm into the flash memory 32C (S19). The CPU 31 updates the current display content in the main area 51 of the display screen 5A based on the data code Cm stored in the flash memory 32C (S21). The CPU 31 temporarily stores the DO code into the RAM 32B in association with the variable i (S23).

The CPU 31 determines whether the flag stored in the RAM 32B indicates ON (S25). In a case where the flag indicates OFF (S25:NO), the CPU 31 returns the process to S11. The CPU 31 repeats S11 to S23 until the flag is turned on. In the meantime, every time the adding operation, the changing operation, or the deleting operation is received, the updating of the variable i (S15), the identifying of the DO code (S17), the updating and storing of the data code Cm (S19), the updating of the current display content (S21), and the temporarily storing of the DO code (S23) are repeatedly performed.

If the CPU 31 determines that the flag stored in the RAM 32B indicates ON (S25:YES), the CPU 31 sets the flag to OFF (S27). The CPU 31 obtains the one or more DO codes stored in the RAM 32B in S23. In the first flag control process (refer to FIG. 5), in a case where an input operation of selecting the save button 53 is detected (S1:YES) or in a case where the second period or more has elapsed without any input operation being detected (S7:YES), the flag is set to ON (S3). Thus, the CPU 31 obtains the one or more DO codes stored in the RAM 32B in a first period that is from a start timing to an end timing described below. The start timing is a timing at which a period in which no input operation is received has elapsed for the second period or a timing at which a saving operation is detected. The end timing is a timing at which a period in which no input operation is received after the start timing has elapsed for the second period, or a timing at which a saving operation is detected after the start timing.

The CPU 31 determines, based on the one or more obtained DO codes and the data code Cm, an UNDO code, which is an instruction code necessary to return the post-update display content to the pre-update display content, for each of the one or more obtained DO codes (S29). The CPU 31 associates the variable i that has been associated with a corresponding one of the one or more DO codes referred to when determining the UNDO code with the UNDO code as the operating order, and adds and stores the variable i to the history information Us in the flash memory 32C (S31). In a case where a plurality of DO codes are stored in the RAM 32B, the CPU 31 executes the above processing on all the stored DO codes. Thereafter, the CPU 31 deletes all the DO codes stored in RAM 32B.

The CPU 31 obtains the one or more UNDO codes from the history information Us stored in the flash memory 32C. The CPU 31 identifies, based on the one or more obtained UNDO codes and the data code Cm, a DO code necessary to update the pre-update display content to the post-update display content, for each of the one or more obtained UNDO codes (S33). The CPU 31 updates the data code Ch indicating the display content in the operation history area 52 of the display screen 5A in order to display the input operation items corresponding to the identified DO codes in the same order as the operating order associated with the each of the UNDO codes referred to when identifying the DO codes (S35). The CPU 31 updates the display content in the operation history area 52 of the display screen 5A based on the updated date code Ch (S37). The order of the input operation items displayed in the operation history area 52 corresponds to the order of the corresponding input operations. The CPU 31 returns the process to S11.

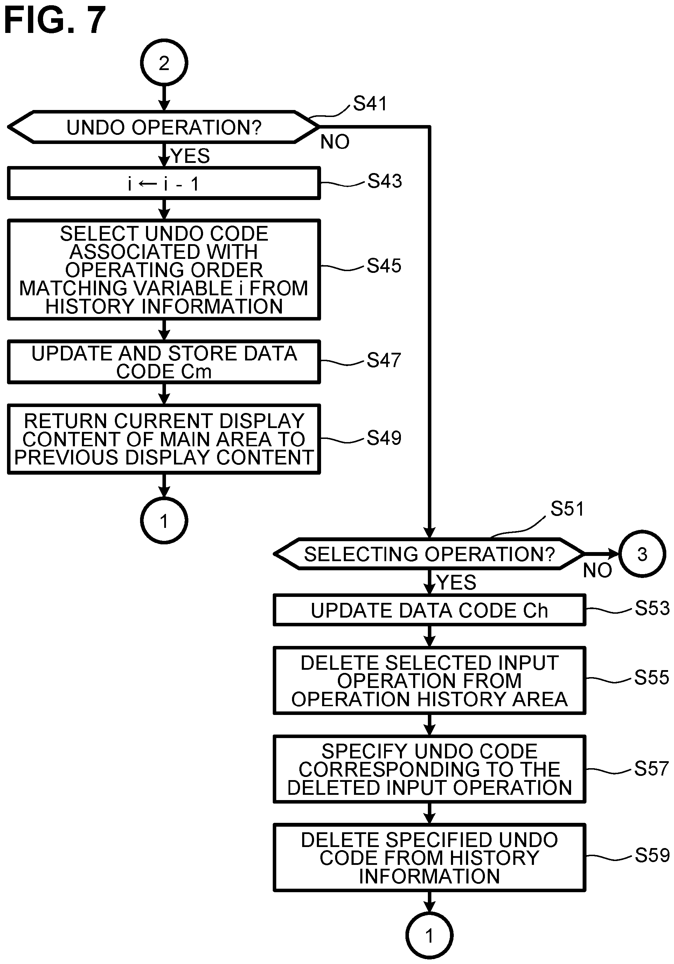

If the CPU 31 determines that an input operation has been detected (S11:YES) and the detected input operation is none of the adding operation, the changing operation, and the deleting operation (S13:NO), the CPU 31 moves the process to S41 (refer to FIG. 7). As illustrated in FIG. 7, the CPU 31 determines whether the detected input operation is an UNDO operation (S41). If the CPU 31 determines that the input operation is an UNDO operation (S41:YES), the CPU 31 moves to the process to S43.

The CPU 31 updates the variable i by subtracting one from the variable i (S43). The CPU 31 selects the UNDO code associated with the operating order that matches the variable i from the history information Us stored in the flash memory 32C (S45). The CPU 31 updates the data code Cm by executing the selected UNDO code and stores the updated data code Cm into the flash memory 32C (S47). The CPU 31 updates the current display content in the main area 51 of the display screen 5A based on the data code Cm stored in the flash memory 32C (S49). Thus, the current display content in the main area 51 is returned to the pre-update display content from the post-update display content. The pre-update display content is thus stored in the flash memory 32C as the data code Cm indicating the current display content. The CPU 31 returns the process to S11.

If the CPU 31 determines that the detected input operation is not an UNDO operation (S41:NO), the CPU 31 determines whether the detected input operation is a selecting operation (S51). If the CPU 31 determines that the input operation is a selecting operation (S51:YES), the CPU 31 moves the process to S53.

The CPU 31 updates the data code Ch stored in the flash memory 32C such that the selected input operation item is deleted from the operation history area 52 of the display screen 5A (S53). The CPU 31 updates the display content in the operation history area 52 based on the updated date code Ch (S55). Thus, the input operation item selected in response to the selecting operation is deleted from the operation history area 52.

The CPU 31 identifies the DO code corresponding to the input operation item deleted from the operation history area 52, and further determines, based on the identified DO code, an UNDO code for returning the post-update display content to the pre-update display content (S57). The CPU 31 deletes the determined UNDO code among the UNDO codes in the history information Us (S59). The CPU 31 returns the process to S11 (refer to FIG. 6).

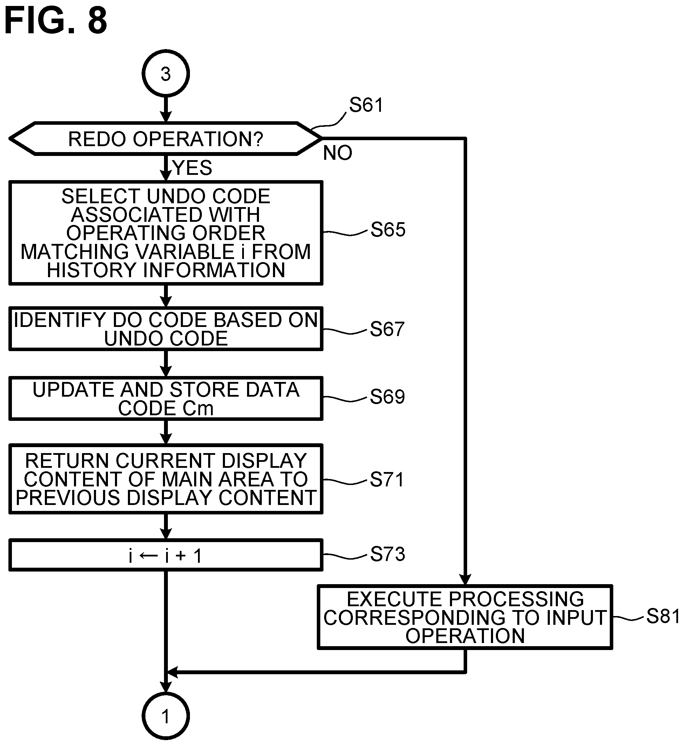

If the CPU 31 determines that the detected input operation is not a selecting operation (S51:NO), the CPU 31 moves the process to S61 (refer to FIG. 8). As illustrated in FIG. 8, the CPU 31 determines whether the detected input operation is a REDO operation (S61). If the CPU 31 determines that the input operation is a REDO operation (S61:YES), the CPU 31 moves the process to S65.

The CPU 31 selects the UNDO code associated with the operating order that matches the variable i from the history information Us stored in the flash memory 32C (S65). The CPU 31 identifies the DO code necessary to update the pre-update display content to the post-update display content, based on the selected UNDO code (S67). The identified DO code corresponds to an instruction code necessary to undo the UNDO operation to return the current display content in the main area 51 to the state before the UNDO operation is executed, in response to the REDO operation. The CPU 31 updates the data code Cm by executing the identified DO code and stores the data code Cm into the flash memory 32C (S69).

The CPU 31 updates the current display content in the main area 51 of the display screen 5A based on the data code Cm stored in the flash memory 32C (S71). Thus, the current display content in the main area 51 is returned to the post-update display content from the pre-update display content updated by the UNDO operation. The post-update display content is thus stored in the flash memory 32C as the data code Cm indicating the current display content. The CPU 31 updates the variable i by adding one to the variable i (S73). The CPU 31 returns the process to S11 (refer to FIG. 6).

If the CPU 31 determines that the detected input operation is not a REDO operation (S6ENO), the CPU 31 executes processing corresponding to the input operation (S81), and the CPU 31 returns the process to S11 (refer to FIG. 6).

### <Actions and Effects of First Embodiment>

In a case where the display device 3 has received an UNDO operation (S41:YES), the display device 3 selects the UNDO codes in the reverse order of the operating order with reference to the history information Us (S43, S45). The display device 3 can thus implement the function of undoing the adding operation, the changing operation, and the deleting operation to return the display content to the previous display content (the UNDO function) by executing the selected UNDO codes as they are. The display device 3 can perform the UNDO function without referring to the plurality of instruction codes stored in the history information Us, thereby efficiently implementing the UNDO function.

In a case where the display device 3 has received an UNDO operation (S41:YES), the display device 3 executes the UNDO codes in the history information Us as they are to update the date code Cm (S47). As a result, the current display content in the main area 51 of the display screen 5A is returned from the post-update display content to the pre-update display content (S49). Therefore, the user of the display device 3 can cause the display device 3 to perform the UNDO function by performing an UNDO operation via the input unit 34.

The display device 3 identifies the one or more DO codes necessary to update the pre-update display content to the post-update display content, based on the UNDO codes in the history information Us (S33). The display device 3 displays the input operation items corresponding to the one or more identified DO codes in the operation history area 52 of the display screen 5A in the operating order of the input operations (S37). This enables the user to grasp the history of the input operations by visual identifying the input operation items displayed in the operating order in the operation history area 52.

In a case where display device 3 has received a selecting operation for selecting an input operation item displayed in the operation history area 52 (S51:YES), the display device 3 deletes the selected input operation item from the operation history area 52 (S55), and deletes a corresponding UNDO code in the history information Us (S59). The user can thus secure a remaining capacity by reducing a storage capacity of the display device 3.

The display device 3 stores at least one DO code into the RAM 32B based on at least one input operation executed in the first period (S23). The display device 3 determines an UNDO code based on the at least one DO code stored in RAM 32B (S29), and adds and stores the UNDO code to the history information Us (S31). This enables reduction of a frequency of determining an UNDO code, thereby reducing a processing load to the CPU 31 in the display device 3. In a case where the period during which the input operation is not received has elapsed for the second period or in a case where a saving operation is performed, the display device 3 can determine and store an UNDO code into the history information Us.

In a case where the display device receives an adding operation, a changing operation, or a deleting operation as an input operation (S13:YES), the display device can determine an UNDO code and update the history information Us.

### <Special Notes of First Embodiment>

The present invention is not limited to the first embodiment, and various modifications can be available. In the present invention, the image displayed on the display unit 33 is not limited to text strings, and may be figures or other objects. The format of the data code Cm is not limited to the JSON format, and may be another format. The display device 3 may manage the current display content in the main area 51 by data in another format.

The display device 3 may add a DO code, which is an instruction code for updating the current display content in response to an adding operation, a changing operation, or a deleting operation, to the history information Us in association with a corresponding UNDO code. The UNDO code may be added to the history information Us in further association with the date and time when the corresponding input operation was performed, comment information associated with the corresponding input operation, and other information.

The display device 3 may accept an UNDO operation in a state where two or more input operation items in the operation history area 52 are selected. In this case, the display device 3 may select two or more UNDO codes corresponding to the selected two or more input operation items from the history information Us. The display device 3 may execute the selected two or more UNDO codes in the order reverse to the input order. By doing so, the display device 3 may implement an UNDO function of undoing a plurality of operations including an adding operation, a changing operation, and a deleting operation at once to return the display content to the previous display content.

The input operation items displayed in the operation history area 52 of the display screen 5A may be listed from the bottom to the top in the operating order. In addition to the detail of the operation (addition, change, or deletion) and the image to be operated, the input operation item may be associated with other information. For example, the date and time when the input operation was performed may be associated with the input operation item. The operation history area 52 may be displayed in response to an operation of selecting the UNDO button 54 or the REDO button 55.

An upper limit for the number of input operation items that can be displayed in the operation history area 52 may be specified in advance. In a case where the number of input operation items displayed in the operation history area 52 exceeds the upper limit, the display device 3 may leave the input operation items corresponding to the upper limit in the operating order, and select and delete the other input operation items. The display device 3 may delete the UNDO code corresponding to the deleted input operation item in the history information Us.

The timing at which the display device 3 updates the history information Us, in other words, the timing at which the flag is set to ON in the first flag control process, is not limited to the timing in the first embodiment. For example, the display device 3 may set the flag to ON at a certain cycle. The display device 3 may set the flag to ON in response to the processing load to the CPU 31 being equal to or lower than a certain level. The display device 3 may set the flag to ON in response to the total number of times one or more of the adding operation, the changing operation, and the deleting operation were performed having reached a certain value. The display device 3 may determine and add an UNDO code to the history information Us every time the adding operation, the changing operation, or the deleting operation is executed.

In a case where the display device 3 receives an input operation other than an adding operation, a changing operation, or a deleting operation, the display device 3 may determine an UNDO code corresponding to the received input operation and add the determined UNDO code to the history information Us. For example, in a case where an operation of shifting a location of an image displayed in the main area 51, an operation of enlarging or reducing a size of the image, an operation of changing the color of the image, an operation of changing the format (font) of the image, or another operation is performed, the display device 3 may determine an UNDO code corresponding to the performed operation and add the determined UNDO code to the history information Us.

The data code Cm is an example of a "current display content" of the present invention. The UNDO code is an example of an "UNDO process" of the present invention. The processing of S13 is an example of a "first receiving step" of the present invention. The processing of S19 is an example of a "first storing step" of the present invention. The processing of S29 is an example of a "first determining step" of the present invention. The processing of S31 is an example of a "second storing step" of the present invention. The processing of S37 is an example of a "second displaying step" of the present invention. The processing of S41 is an example of a "second receiving step" of the present invention. The processing of S49 is an example of an "UNDO step" of the present invention. The processing of S47 is an example of a "third storing step" of the present invention. The processing of S33 is an example of a "first identifying step" of the present invention. The processing of S37 is an example of a "second displaying step" of the present invention. The processing of S51 is an example of a "selecting step" of the present invention. The processing of S55 is an example of a "first deleting step" of the present invention. The processing of S57 is an example of a "second determining step" of the present invention. The processing of S59 is an example of a "second deleting step" of the present invention. The processing of S23 is an example of a "fourth storing step" of the present invention.

The CPU 31 that executes the processing of S13 is an example of "first receiving means" of the present invention. The CPU 31 that executes the processing of S19 is an example of "first storing means" of the present invention. The CPU 31 that executes the processing of S29 is an example of "first determining means" of the present invention. The CPU 31 that executes the processing of S31 is an example of "second storing means" of the present invention. The display device 3 is an example of a "history management device" of the present invention.

### <Second Embodiment>

The second embodiment is different from the first embodiment in that the server 2 manages the history information Us instead of the display device 3. The description of the configuration and the processes common to the first embodiment will be omitted or simplified.

### <Overview of Communication System 1>

An overview of a communication system 1 will be described with reference to FIG. 9. The communication system 1 includes the server 2 and display devices 3A, 3B, and 3C. The server 2 is communicably connected to the access point 4A via the network line 4. The display devices 3A, 3B, and 3C each have the same configuration as the display device 3 (refer to FIG. 1) of the first embodiment, and are connected to the access point 4A so as to be wirelessly communicable with the access point 4A. The server 2 and each of the display devices 3A, 3B, and 3C are communicable with each other via the network line 4 and the access point 4A.

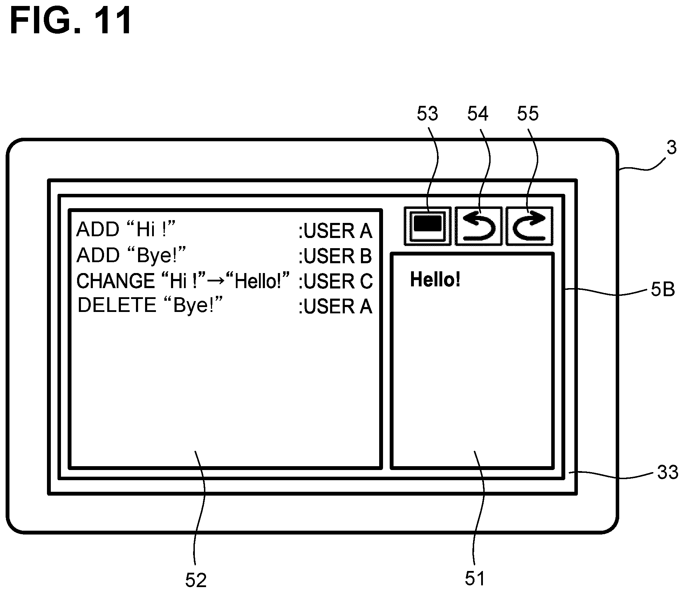

Users of the display devices 3A, 3B, and 3C are a "user A", a "user B", and a "user C", respectively. The user C is an administrator of the communication system 1. Identification information for identifying a user who uses a corresponding one of the display devices 3A to 3C is stored in the flash memory 32C of the corresponding one of the display devices 3A to 3C. A display screen 5B (refer to FIG. 11) is displayed on the display unit 33 of each of the display devices 3A to 3B. The display screen 5B will be described in detail later.

The server 2 includes a CPU 21, a ROM 22A, a RAM 22B, a flash memory 22C, and a communication I/F 23. The CPU 21 controls the server 2 entirely. The ROM 22A stores a boot program and setting information. The RAM 22B temporarily stores data during execution of processing by the CPU 21. The flash memory 22C stores a control program to be executed by the CPU 21, a data code Cm, a data code Ch, history information Us, and identification information of the user C who is the administrator of the communication system 1. The communication I/F 23 is a communication module for performing communication with the respective display devices 3A to 3C via the network line 4 and the access point 4A.

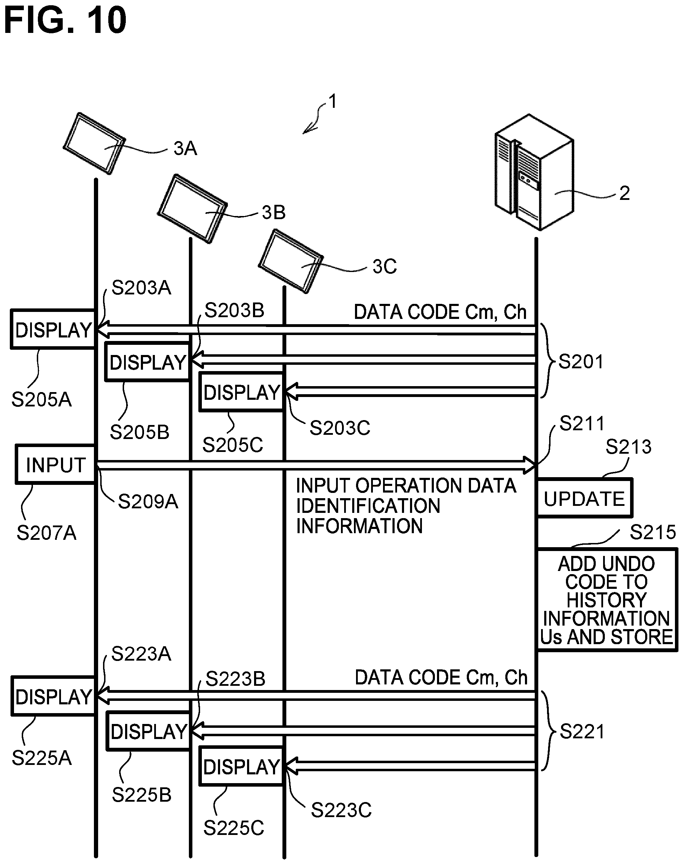

As illustrated in FIG. 10, in the communication system 1, the data code Cm indicating the current display content in the main area 51 of the display screen 5B (refer to FIG. 11) and the data code Ch indicating the display content of the operation history area 52 are transmitted from the server 2 to each of the display devices 3A to 3C (S201). The display devices 3A to 3C each receive the data codes Cm and Ch (S203a, S203b, S203c), and update and display the main area 51 and the operation history area 52 of the display screen 5B (S205a, S205b, S205c). Thus, the display screens 5B of the display devices 3A to 3C are shared in the communication system 1.

In a case where an input operation is performed via the input unit 34 on one of the display devices 3A to 3C, the one of the display devices 3A to 3C transmits input operation data indicating details of the input operation to the server 2. For example, in a case where an input operation is performed on the display device 3A (S207a), the display device 3A transmits input operation data to the server 2 (S209a). In a case where the display device 3A transmits the input operation data to the server 2, the display device 3A also transmits the identification information of the user A who uses the display device 3A to the server 2 (S209a).

The server 2 receives the input operation data and the identification information from the display device 3A (S211). The server 2 updates the data codes Cm and Ch based on the received input operation data (S213). The server 2 transmits the updated data codes Cm and Ch to the display devices 3A to 3C (S221). The display devices 3A to 3C each receive the data codes Cm and Ch (S223a, S223b, S223c), and update and display the main area 51 and the operation history area 52 of the display screen 5B (S225a, S225b, S225c). Thus, even when an input operation is performed on the display device 3A, the display screen 5B updated in response to the input operation is shared among the display devices 3A to 3C.

FIG. 11 illustrates the display screen 5B displayed on the display unit 33 of each of the display devices 3 in the second embodiment. The point where the display screen 5B is different from the display screen 5A (refer to FIG. 4) of the first embodiment is that the identification information indicating the user of the display device 3 on which the input operation has been performed is displayed in the operation history area 52 in association with the input operation. The main area 51, the save button 53, the UNDO button 54, and the REDO button 55 are identical to those included in the display screen 5A of the first embodiment.

In a case where the received input operation data indicates an addition operation, a changing operation, or a deleting operation, the server 2 determines an UNDO code necessary to return the post-update display content to the pre-update display content, based on the DO code corresponding to the input operation. As illustrated in FIG. 10, the server 2 adds the determined UNDO code to the history information Us in association with the received identification information and the operating order and stores the determined UNDO code associated with the received identification information and the operating order into the flash memory 22C (S215). That is, in the second embodiment, unlike the first embodiment, the identification information is also associated with the UNDO code in the history information Us, and is stored into the flash memory 22C of the server 2.

### <Second Flag Control Process>

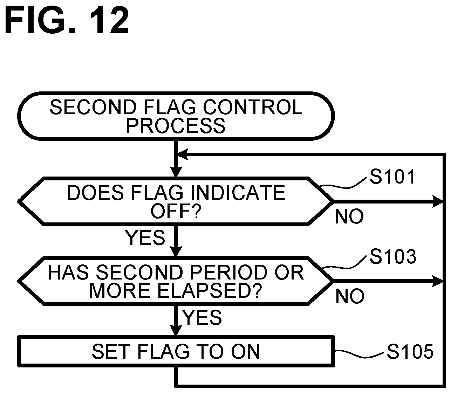

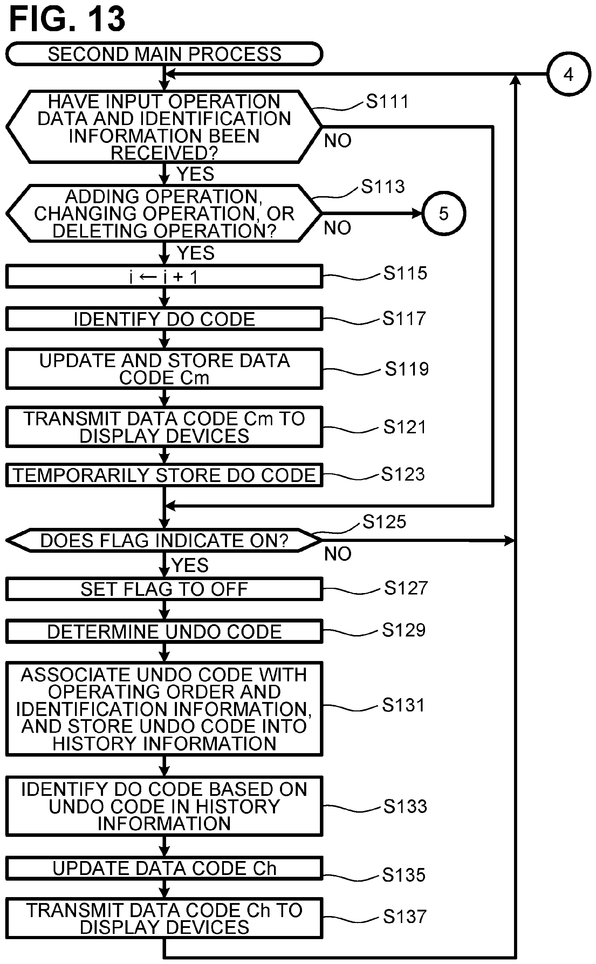

The second flag control process will be described with reference to FIG. 12. In response to the server 2 being powered on, the CPU 21 reads the control program from the flash memory 22C to execute the control program, whereby the second flag control process is started. The flag is stored in the RAM 22B. The flag is referred to in a second main process (refer to FIGS. 13 to 16) described later. At the start of the second flag control process, the flag indicates OFF.

The CPU 21 determines whether the flag indicates OFF (S101). If the CPU 21 determines that the flag indicates ON (S101:NO), the CPU 21 returns the process to S101. If the CPU 21 determines that the flag indicates OFF (S101:YES), the CPU 21 determines whether the second period or more has elapsed in a state where the flag indicates OFF and any input operation has not been detected (S103). If the CPU 31 determines that the second period or more has elapsed in a state where the flag indicates OFF and any input operation has not been detected (S103:YES), the CPU 21 sets the flag to ON (S105). The CPU 31 returns the process to S101.

### <Second Main Process>

The second main process will be described with reference to FIGS. 13 to 16. In response to the server 2 being powered on, the CPU 21 reads the control program from the flash memory 22C to execute the control program, whereby the second main process is started. The second main process is executed in parallel with the second flag control process. At the start of the second main process, a variable i stored in the RAM 22B is assigned with zero.

The CPU 21 determines whether the input operation data and the identification information both transmitted from one of the display devices 3A to 3C have been received (S111). If the CPU 21 determines that the input operation data and the identification information have not been received (S111:NO), the CPU 21 moves the process to S125. In response to reception of the input operation data and the identification information (S 111:YES), the CPU 21 determines, based on the received input operation data, whether the input operation performed on one of the display devices 3 is one of an adding operation, a changing operation, and a deleting operation (S113).

If the CPU 21 determines that the input operation is one of an adding operation, a changing operation, and a deleting operation (S113:YES), the CPU 21 updates the variable i by adding one to the variable i (S115). The CPU 21 identifies the DO code corresponding to the determined one of the adding operation, the changing operation, and the deleting operation (S117). The CPU 21 updates the data code Cm by executing the identified DO code and stores the data code Cm into the flash memory 22C (S119). The CPU 21 transmits the data code Cm stored in the flash memory 22C to the display devices 3A to 3C (S121). The CPU 21 temporarily stores the DO code identified in the processing of S117 into the RAM 22B in association with the identification information and the variable i received in the processing of the S111 (S123).

The display devices 3A to 3C that have received the data code Cm transmitted in the processing of S121 each update the current display content in the main area 51 of the display screen 5B based on the data code Cm and display the updated display content.

The CPU 21 determines whether the flag stored in the RAM 22B indicates ON (S125). In a case where the flag indicates OFF (S125:NO), the CPU 21 returns the process to S111. The CPU 21 repeats the processing of S111 to S123 until the flag is turned ON. In the meantime, every time the input operation data indicating the adding operation, the changing operation, or the deleting operation is received from one of the display devices 3, the updating of the variable i (S115), the identifying of the DO code (S117), the updating and storing of the data code Cm (S119), the transmitting of the current display content (S121), and the temporarily storing of the DO code (S123) are repeatedly performed.

If the CPU 21 determines that the flag stored in the RAM 22B indicates ON (S125:YES), the CPU 21 sets the flag to OFF (S127). The CPU 21 obtains the DO code stored in the RAM 22B in S123. In the second flag control process (refer to FIG. 12), in a case where the second period or more has elapsed without any input operation being received (S103:YES), the flag is turned on (S105). Thus, the CPU 21 obtains one or more DO codes that are stored into the RAM 22B during the first period that is from a timing when the period in which an input operation is not received has elapsed by the second period to a timing when the period in which an input operation is not received has elapsed by the second period again.

The CPU 21 determines, based on the one or more obtained DO codes and the data code Cm, an UNDO code, which is an instruction code necessary to return the post-update display content to the pre-update display content, for each of the one or more obtained DO codes (S129). The CPU 21 associates the variable i associated with the DO code referred to when determining the UNDO code, with the UNDO code as the operating order. The CPU 21 also associates the identification information associated with the DO code referred to when determining the UNDO code, with the UNDO code. The CPU 21 adds and stores the UNDO code associated with the operating order and the identification information to the history information Us in the flash memory 32C (S131). In a case where a plurality of DO codes are stored in the RAM 22B, the CPU 21 executes the above processing on all the stored DO codes. Thereafter, the CPU 21 deletes all the DO codes stored in RAM 22B.

The CPU 21 obtains the one or more UNDO codes from the history information Us stored in the flash memory 22C. The CPU 21 identifies, based on the one or more obtained UNDO codes and the data code Cm, a DO code necessary to update the pre-update display content to the post-update display content, for each of the one or more obtained UNDO codes (S133). The CPU 21 updates the data code Ch indicating the display content in the operation history area 52 of the display screen 5B in order to display the input operation items corresponding to the identified DO codes and the pieces of identification information associated with the respective UNDO codes referred to when identifying the DO codes in the same order as the operating order associated with the each of the UNDO codes (S135). The CPU 21 transmits the updated data code Ch to the display devices 3A to 3C (S137). The CPU 21 returns the process to S111.

The display devices 3A to 3C that have received the data code Ch transmitted in the processing of S137 each update the display content in the operation history area 52 of the display screen 5B based on the data code Ch. Thus, as illustrated in FIG. 11, the input operation items and the pieces of identification information each indicating one of the users of the display devices 3A to 3C who has performed the corresponding input operation are associated with each other and displayed in the operation history area 52 of the display screen 5B. The order of the input operation items and the pieces of identification information displayed in the operation history area 52 corresponds to the order of the corresponding input operations.

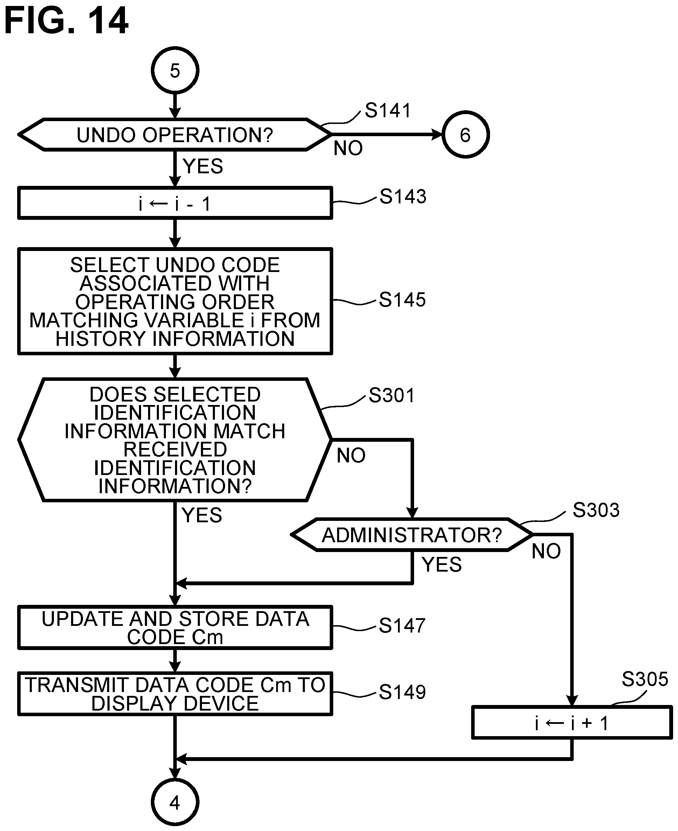

If the CPU 21 determines, based on the received input operation data, that the input operation performed on the one of the display devices 3 is none of an adding operation, a changing operation, and a deleting operation (S113:NO), the CPU 21 moves the process to S141 (refer to FIG. 14). As illustrated in FIG. 14, the CPU 21 determines, based on the received input operation data, whether the input operation performed on the one of display devices 3 is an UNDO operation (S141). If the CPU 21 determines that the input operation is an UNDO operation (S141 :YES), the CPU 21 moves the process to S143.

The CPU 21 updates the variable i by subtracting one from the variable i (S143). The CPU 21 selects the UNDO code associated with the operating order that matches the variable i and the identification information associated with the UNDO code from the history information Us stored in the flash memory 22C (S145).

The CPU 21 determines whether the selected identification information matches the identification information received together with the input operation data indicating the UNDO operation (S301). If the CPU 21 determines that the selected identification information matches the received identification information (S301:YES), the CPU 21 moves the process to S147. The CPU 21 updates the data code Cm by executing the selected UNDO code. The CPU 21 stores the updated data code Cm into the flash memory 32C (S147). The CPU 21 transmits the data code Cm stored in the flash memory 22C to the display devices 3A to 3C (S149). The pre-update display content is thus stored in the flash memory 32C as the data code Cm indicating the current display content. The CPU 21 returns the process to S111 (refer to FIG. 13).

The display devices 3A to 3C that have received the data code Cm transmitted in the processing of S149 each update the current display content in the main area 51 of the display screen 5B based on the data code Cm and display the updated display content. Thus, the current display content in the main area 51 is returned, by the UNDO operation, to the display content before being updated to the post-update display content (the pre-update display content).

If the CPU 21 determines that the identification information associated with the UNDO code selected from the history information Us does not match the identification information received together with the input operation data indicating the UNDO operation (S301:NO), the CPU 21 moves the process to S303. The CPU 21 determines, based on the identification information of the administrator stored in the flash memory 22C, whether the identification information received together with the input operation data indicating the UNDO operation matches the identification information indicating the administrator of the communication system 1 (S303). If the CPU 21 determines that the received identification information matches the identification information indicating the administrator (S303:YES), the CPU 21 moves the process to S147. The processing of S147 and the processing of S149 are the same as in the case where it is determined that the received identification information matches the identification information indicating the administrator, and thus the description thereof will be omitted.

If the CPU 21 determines that the received identification information does not match the identification information indicating the administrator of the communication system 1 (S303: NO), the CPU 21 updates the variable i by adding one to return the variable i updated in S143 to the previous value (S305). In this case, the processing for returning the post-update display content to the post-update display content in the main area 51 of the display screen 5B of the one of the display devices 3 (the updating (S147) and the transmitting (S149) of the data code Cm) is not executed. The CPU 21 returns the process to S111 (refer to FIG. 13).

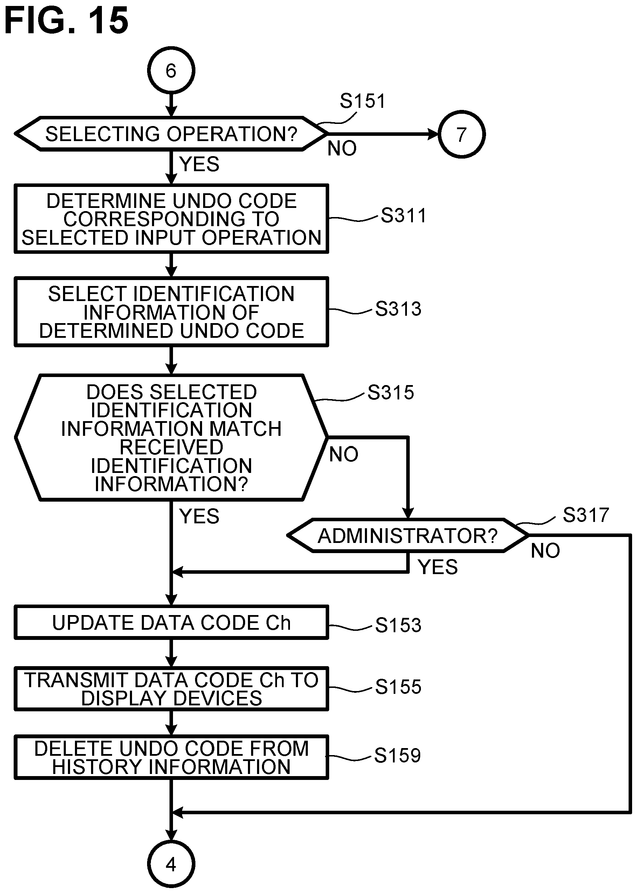

If the CPU 21 determines, based on the received input operation data, that the input operation performed on the one of the display devices 3 is not an UNDO operation (S141:NO), the CPU 21 moves the process to S151 (refer to FIG. 15). As illustrated in FIG. 15, the CPU 21 determines, based on the received input operation data, whether the input operation performed on the one of the display devices 3 is a selecting operation (S151). If the CPU 21 determines that the input operation is a selecting operation (S151:YES), the CPU 21 moves the process to S311.

The CPU 21 identifies the input operation item selected by the selecting operation performed on the one of the display devices 3. The CPU 21 identifies the DO code corresponding to the identified input operation item, and further determines, based on the identified DO code, an UNDO code for returning the post-update display content to the pre-update display content (S311). The CPU 31 selects the identification information associated with the same UNDO code as the determined UNDO code from the history information Us (S313).

The CPU 21 determines whether the selected identification information matches the identification information received together with the input operation data indicating the selecting operation (S315). If the CPU 21 determines that the selected identification information matches the received identification information (S313:YES), the CPU 21 moves the process to S153. The CPU 21 updates the data code Ch stored in the flash memory 22C such that the selected input operation item is deleted from the operation history area 52 of the display screen 5B in response to the selecting operation (S153). The CPU 21 transmits the updated data code Ch to the display devices 3A to 3C (S155). The CPU 21 deletes the UNDO code determined in the processing of S311 from the history information Us (S159). The CPU 21 returns the process to S111 (refer to FIG. 13).

The display devices 3A to 3C that have received the data code Ch transmitted in the processing of S155 each update the display content in the operation history area 52 of the display screen 5B based on the data code Ch. Thus, the input operation item selected by the selecting operation is deleted from the operation history area 52 of the display screen 5B of each of the display devices 3A to 3C.

If the CPU 21 determines that the identification information associated with the same UNDO code as the UNDO code determined in the history information Us does not match the identification information received together with the input operation data indicating the selecting operation (S315:NO), the CPU 21 moves the process to S317. The CPU 21 determines, based on the identification information of the administrator stored in the flash memory 22C, whether the identification information received together with the input operation data indicating the selecting operation matches the identification information indicating the administrator of the communication system 1 (S317). If the CPU 21 determines that the received identification information matches the identification information indicating the administrator (S317:YES), the CPU 21 moves the process to S153. The processing of S153 to the processing of S159 are the same as in the case where it is determined that the received identification information matches the identification information indicating the administrator, and thus the description thereof will be omitted.

If the CPU 21 determines that the received identification information does not match the identification information indicating the administrator of the communication system 1 (S317:NO), the CPU 21 moves the process to S111 (refer to FIG. 13). In this case, the processing of deleting the input operation item selected by the selecting operation from the operation history area 52 of the display screen 5B of the one of the display devices 3 (the updating (S153) and transmitting (S155) of the date code Ch and the updating of the history information Us (S159) is not executed.

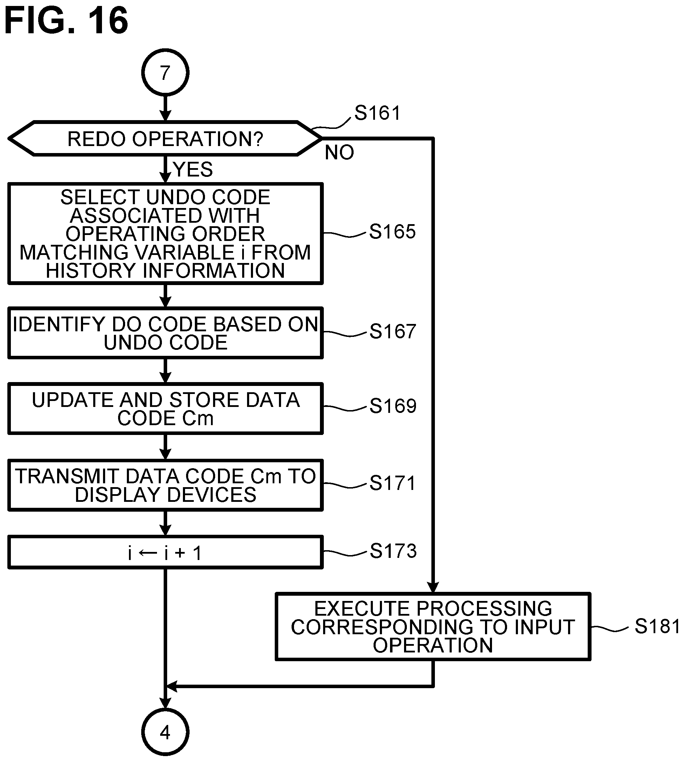

If the CPU 21 determines, based on the received input operation data, that the input operation performed on the one of the display devices 3 is not a selecting operation (S151:NO), the CPU 21 moves the process to S161 (refer to FIG. 16). As illustrated in FIG. 16, the CPU 21 determines, based on the received input operation data, whether the input operation performed on the one of the display devices 3 is a REDO operation (S161). If the CPU 21 determines that the input operation is a REDO operation (S 16 1: YES), the CPU 21 moves the process to S165.

The CPU 21 selects the UNDO code associated with the operating order that matches the variable i from the history information Us stored in the flash memory 22C (S165). The CPU 21 identifies the DO code to be executed for updating the pre-update display content to the post-update display content, based on the selected UNDO code (S167). The CPU 21 updates the data code Cm by executing the identified DO code and stores the data code Cm into the flash memory 22C (S169). The CPU 21 transmits the data code Cm stored in the flash memory 22C to the display devices 3A to 3C (S171). The CPU 21 updates the variable i by adding one to the variable i (S173). The CPU 21 returns the process to S111 (refer to FIG. 13).

The display devices 3A to 3C that have received the data code Cm transmitted in the processing of S171 each update the current display content in the main area 51 of the display screen 5B based on the data code Cm and display the updated display content. Thus, the current display content in the main area 51 is returned to the post-update display content from the pre-update display content updated by the UNDO operation.

If the CPU 21 determines, based on the received input operation data, that the input operation performed on the one of the display devices 3 is not a REDO operation (S161:NO), the CPU 21 executes processing corresponding to the input operation (S181) and moves the process to S111 (refer to FIG. 13).

### <Actions and Effects of Second Embodiment>

In a case where input operation data indicating an UNDO operation is received (S141: YES), the server 2 selects the UNDO code in the reverse order of the operating order with reference to the history information Us (S143, S145). The server 2 updates the data code Cm by executing the selected UNDO code as it is (S147) and transmits the updated data code Cm to the display devices 3 (S149). The display devices 3 each update the current display content in the main area 51 of the display screen 5B from the post-update display content to the pre-update display content based on the data code Cm received from the server 2. The server 2 can thus cause the display devices 3 to perform the UNDO function. The server 2 can cause the display devices 3 to perform the UNDO function without referring to the plurality of instruction codes stored in the history information Us, thereby enabling the display devices 3 to efficiently perform the UNDO function.

In a case where input operation data indicating an UNDO operation is received (S141:YES), the server 2 executes the UNDO code of the history information Us as it is to update the date code Cm (S147). The server 2 transmits the updated data code Cm to the display devices (S149). As a result, the current display content in the main area 51 of the display screen 5B of each of the display devices 3 is returned from the post-update display content to the previous pre-update display content. Therefore, the user of each of the display devices 3 can cause the display devices 3 to perform the UNDO function by performing an UNDO operation via the input unit 34.

In a case where the identification information associated with the UNDO code stored as the history information Us matches the identification information received together with the input operation data indicating the UNDO operation (S301 :YES), the server 2 executes the UNDO code to update the data code Cm (S147) and transmits the updated data code Cm to the display devices 3 (S149). In this case, in a case where a particular user other than the user who has performed the input operation performs an UNDO operation for undoing the input operation, the server 2 can prohibit the current display content in the main area 51 from being updated from the post-update display content to the pre-update display content. That is, in a case where the same user as the user who has performed the input operation performs the UNDO operation for undoing the input operation, the server 2 can update the current display content in the main area 51 from the post-update display content to the pre-update display content.

In a case where the identification information received together with the input operation data indicating the UNDO operation matches the identification information of the administrator of the communication system 1 (S303: YES), the server 2 executes the UNDO code to update the data code Cm (S147) and transmits the updated data code Cm to the display devices 3 (S149). In this case, in a case where a particular user other than the user who has performed the input operation performs the UNDO operation for undoing the input operation, if the particular user is the administrator, the server 2 can update the current display content in the main area 51 from the post-update display content to the pre-update display content.

The server 2 identifies the one or more DO codes necessary to update the pre-update display content to the post-update display content, based on the UNDO codes of the history information Us (S133). The server 2 updates the data code Ch such that the input operation item corresponding to the identified DO code and the identification information of the user who has performed the input operation are displayed in the operation history area 52 of the display screen 5B with being associated with each other (S135). The server 2 transmits the updated data code Ch to the display devices 3 (S137). Therefore, the users of the display devices 3 can grasp the history of the input operations by visually recognizing the input operation items displayed in the operating order in the operation history area 52. In addition, the users of the display devices 3 can confirm the user who has performed the input operation.

In a case where the identification information associated with the UNDO code stored as the history information Us matches the identification information received together with the input operation data indicating the selecting operation (S315:YES), the server 2 updates the data code Ch so as to delete the selected input operation item from the operation history area 52 (S153) and transmits the updated data code Ch to the display devices 3 (S155). The server 2 determines the UNDO code corresponding to the selected input operation item in the history information Us (S311), and deletes the UNDO code from the history information Us (S159).

In this case, in a case where a particular user other than the user who has performed the input operation performs a selecting operation for deleting the UNDO code corresponding to the input operation from the history information Us, the server 2 can prohibit the input operation item from being deleted from the operation history area 52 and the UNDO code from being deleted from the history information Us. That is, in a case where the same user as the user who has performed the input operation performs a selecting operation for the input operation, the server 2 can update the current display content in the operation history area 52 and delete the UNDO code from the history information Us.

### <Special Notes of Second Embodiment>

The present invention is not limited to the second embodiment, and various modifications can be available. The modifications described in the first embodiment can be applied to the second embodiment as appropriate.

Each display device 3 may periodically transmit request data for requesting the data codes Cm and Ch to the server 2. The server 2 may transmit the data codes Cm and Ch to the respective display devices 3 at the timing of receiving the request data from the display devices 3. Alternatively, the server 2 may repeatedly transmit the data codes Cm and Ch to the display devices 3 in certain cycles. The function of the server 2 described in the second embodiment may be implemented by any of the display devices 3A to 3C (a main display device) instead of the server 2.

In the second embodiment, the identification information of the user who uses one of the display devices 3 is transmitted from the one of the display devices 3 to the server 2 together with the input operation data. In a case where the display devices 3 are assigned to the users, respectively, it can be said that each piece of the identification information is identification information indirectly identifying a corresponding display device 3. In contrast, each display device 3 may transmit identification information (e.g., a serial number, a MAC address, or an IP address of the display device 3) for directly identifying the display device 3 to the server 2 together with the input operation data. In the operation history area 52 of the display screen 5B, the input operation item and the identification information for directly identifying the display device 3 may be displayed in association with each other.

In response to receiving an UNDO operation for returning the post-update display content to the pre-update display content, a display device 3 may determine whether an input operation for updating the pre-update display content to the post-update display content has been performed in the past via the input unit 34. The display device 3 may transmit the input operation data indicating the UNDO operation to the server 2 only when the input operation has been performed in the past. On the other hand, in a case where the input operation has not been performed in the past, the display device 3 may prohibit the UNDO function without transmitting the input operation data indicating the UNDO operation to the server 2. That is, the display device 3 may enable the UNDO function only when the same user as the user who has performed the input operation performs an UNDO operation for undoing the input operation.

The display device 3 may receive an UNDO operation in a state where two or more input operation items are selected in the operation history area 52. In this case, the display device 3 may extract the input operation item corresponding to the input operation performed in the past via the input unit 34, from among the two or more selected input operation items. The display device 3 may transmit, to the server 2, the input operation data indicating an UNDO operation for undoing the input operation corresponding to the extracted input operation item. On the other hand, the server 2 may select the UNDO code from the history information Us based on the received input operation data, and execute the selected UNDO code.

In response to the display device 3 receives a selecting operation for selecting an input operation item in the operation history area 52, the display device 3 may determine whether an input operation corresponding to the selected input operation item has been performed in the past via the input unit 34. The display device 3 may extract input operation items corresponding to the input operations performed in the past via the input unit 34 and transmit the input operation data indicating these selecting operations to the server 2. On the other hand, with respect to the input operation items corresponding to the input operations that have not been performed in the past via the input unit 34, the display device 3 may prohibit the server 2 from deleting an UNDO code from the history information Us without transmitting input operation data indicating a selecting operation to the server 2. That is, the display device 3 may delete the selected input operation item in the operation history area 52 only when the user performs the selecting operation for selecting and deleting the input operation performed by the user.

The processing of S113 is another example of the "first receiving step" of the present invention. The processing of S119 is another example of the "first storing step" of the present invention. The processing of S129 is another example of the "first determining step" of the present invention. The processing of S131 is another example of the "second storing step" of the present invention. The processing of S137 is another example of the "second displaying step" of the present invention. The processing of S141 is another example of the "second receiving step" of the present invention. The processing of S149 is another example of the "UNDO step" of the present invention. The processing of S147 is another example of the "third storing step" of the present invention. The processing of S133 is another example of the "first identifying step" of the present invention. The processing of S137 is another example of the "second displaying step" of the present invention. The processing of S151 is an example of a "third receiving step" of the present invention. The processing of S155 is another example of the "first deleting step" of the present invention. The processing of S311 is another example of the "second determining step" of the present invention. The processing of S159 is another example of the "second deleting step" of the present invention. The processing of S23 is another example of the "fourth storing step" of the present invention.

The CPU 31 that executes the processing of S113 is another example of the "first receiving means" of the present invention. The CPU 31 that executes the processing of S119 is another example of the "first storing means" of the present invention. The CPU 31 that executes the processing of S129 is another example of the "first determining means" of the present invention. The CPU 31 that executes the processing of S131 is another example of the "second storing means" of the present invention. The server 2 is another example of the "history management device" of the present invention.

### Reference Signs List

1: communication system
2: server
3, 3A, 3B, 3C: display device
21, 31: CPU
51: main area
52: operation history area

## Claims

1. A history management program that causes a computer to execute:
a first receiving step to receive an input operation for updating a display content on a display unit;
a first storing step to store the display content into a storage unit as a current display content, the display content having been updated in response to the input operation received in the first receiving step;
a first determining step to determine an UNDO process necessary to return the current display content to a pre-update display content being the display content before update; and
a second storing step to store the UNDO process determined in the first determining step into the storage unit as history information, in association with an operating order indicating an ordinal number of the input operation received in the first receiving step.

2. The history management program according to claim 1, the history management program that causes the computer to further execute:
a first displaying step to display the current display content on the display unit;
a second receiving step to receive an UNDO operation for returning the current display content having been displayed in the first displaying step to the pre-update display content;
in response to receiving the UNDO operation in the second receiving step, an UNDO step to execute the UNDO process selected in an order reverse to the operating order by referring to the history information stored in the storage unit, to display the pre-update display content as a replacement for the current display content; and
a third storing step to store the pre-update display content as the current display content.

3. The history management program according to claim 1 or 2, the history management program that causes the computer to further execute:
a first identifying step to identify the input operation based on the UNDO process by referring to the history information stored in the storage unit in the second storing step, the input operation having been received in the first receiving step; and
a second displaying step to display the input operation identified in the first identifying step on the display unit in the operating order.

4. The history management program according to claim 3, the history management program that causes the computer to further execute:
a selecting step to select the input operation displayed on the display unit in the second displaying step;
a first deleting step to delete the input operation selected in the selecting step from the history information;
a second determining step to determine the UNDO process necessary to return the display content updated in response to the input operation selected in the selecting step, to the pre-update display content; and
a second deleting step to delete the UNDO process determined in the second determining step from the history information stored in the storage unit.

5. The history management program according to any one of claims 1 to 4, wherein the second storing step including storing the UNDO process determined in the first determining step into the storage unit as the history information in association with identification information and the operating order, the identification information being for identifying a display device that has received the input operation in the first receiving step.

6. The history management program according to claim 2, wherein
the second storing step including storing the UNDO process determined in the first determining step into the storage unit as the history information in association with identification information and the operating order, the identification information being for identifying a display device that has received the input operation in the first receiving step, and
the UNDO step including, in a case where the identification information associated with the UNDO process selected in the order reverse to the operating order matches the identification information for identifying the display unit that has received the UNDO operation in the second receiving step as a result of referring to the history information stored in the storage unit, executing the selected UNDO process to display the pre-update display content as replacement for the current display content.

7. The history management program according to claim 2, wherein
the second storing step including storing the UNDO process determined in the first determining step into the storage unit as the history information in association with identification information and the operating order, the identification information being for identifying a display device that has received the input operation in the first receiving step, and
the UNDO step including, in a case where the identification information of the display device that has received the UNDO operation in the second receiving step satisfies a certain condition, executing the UNDO process selected in the order reverse to the operating order by referring to the history information stored in the storage unit, to display the pre-update display content on the display unit as replacement for the current display content.

8. The history management program according to claim 3, wherein
the second storing step including storing the UNDO process determined in the first determining step into the storage unit as the history information in association with identification information and the operating order, the identification information being for identifying a display device that has received the input operation in the first receiving step, and
the second displaying step including displaying the input operation identified in the first identifying step and the identification information associated with the UNDO process on the display unit in the operating order.

9. The history management program according to claim 8, the history management program that causes the computer to further execute:
a third receiving step to receive a selecting operation from the display device, the selecting operation being for selecting the input operation displayed on the display unit in the second displaying step,
a first deleting step to delete the input operation selected by the selecting operating received in the third receiving step in a case where the identification information for identifying the display device that has received the selecting operation in the third receiving step matches the identification information associated with the input operation selected by the selecting operation,
a second determining step to determine the UNDO process necessary to return the display content updated in response to the input operation selected by the selecting operation received in the third receiving step, to the pre-update display content, and
a second deleting step to delete the UNDO process determined in the second determining step from the history information stored in the storage unit.

10. The history management program according to any one of claims 1 to 9, the history management program that causes the computer to further execute:
a fourth storing step to store the input operation received in the first receiving step into the storage unit during a first period,
wherein the first determining step including determining the UNDO process based on the input operation stored in the storage unit in the fourth storing step.

11. The history management program according to claim 10, wherein
the first period includes a start timing and an end timing, the start timing being a timing at which a period in which no input operation is received in the first receiving step has elapsed for a second period or a timing at which a saving operation for saving the display content on the display unit is detected, the end timing being a timing at which a period in which no input operation is received in the first receiving step after the start timing has elapsed for the second period, or a timing at which the saving operation is received after the start timing.

12. The history management program according to claim 10, wherein
the first receiving step including receiving, as the input operation, one of an operation for display a new image on the display unit, an operation for changing the image displayed on the display unit to another image, and an operation for deleting the image displayed on the display unit.

13. A history management method, comprising:
a first receiving step to receive an input operation for updating a display content on a display unit;
a first storing step to store the display content into a storage unit as a current display content, the display content having been updated in response to the input operation received in the first receiving step;
a first determining step to determine an UNDO process necessary to return the current display content to a pre-update display content being the display content before being updated; and
a second storing step to store the UNDO process determined in the first determining step into the storage unit as history information, in association with an operating order indicating an ordinal number of the input operation received in the first receiving step.

14. A history management device, comprising:
first receiving means to receive an input operation for updating a display content on a display unit;
first storing means to store the display content into a storage unit as a current display content, the display content having been updated in response to the input operation received in the first receiving means;
first determining means to determine an UNDO process necessary to return the current display content to a pre-update display content being the display content before being updated; and
second storing means to store the UNDO process determined in the first determining means into the storage unit as history information, in association with an operating order indicating an ordinal number of the input operation received in the first receiving means.
